# EUROPÄISCHE PATENTSCHRIFT

(11) **EP 1 175 334 B1**
(45) Veröffentlichungstag und Bekanntmachung des Hinweises auf die Patenterteilung: **16.04.2003**
(21) Anmeldenummer: 00922317.3
(22) Anmeldetag: 02.05.2000
(51) Int. Cl.: B64C 3/48

(54) **FLUGZEUGTRAGFLÜGEL**
AEROPLANE WINGS
AILES D'AVION

(30) Priorität: 04.05.1999 AT 79399
(43) Veröffentlichungstag der Anmeldung: 30.01.2002
(73) Patentinhaber: Ofner, Anton Gerald, 1190 Wien (AT)
(72) Erfinder: Ofner, Anton Gerald, 1190 Wien (AT)
(74) Vertreter: Beer, Manfred, Dipl.-Ing.
(86) Internationale Anmeldenummer: AT0000112
(87) Internationale Veröffentlichungsnummer: WO00066427

(56) Entgegenhaltungen:
- WO-A-93/19978
- DE-A- 2 353 245
- FR-A- 2 049 028
- US-A- 1 924 871
- US-A- 4 890 803

## Beschreibung

Die Erfindung betrifft Flugzeugtragflügel, insbesondere Tragflügel mit zum Schnellflug geeignetem Querschnitt und Anstellwinkel, wobei den Tragflügeln deren Auftrieb beeinflussende Flügelteile zugeordnet sind, die aus einer aerodynamisch unwirksamen Versorgungslage eine aerodynamisch wirksame Wirkstellung und aus der Wirkstellung zurück in die Versorgungslage verstellbar sind, gemäß dem Oberbegriff das Anspruchs 1.

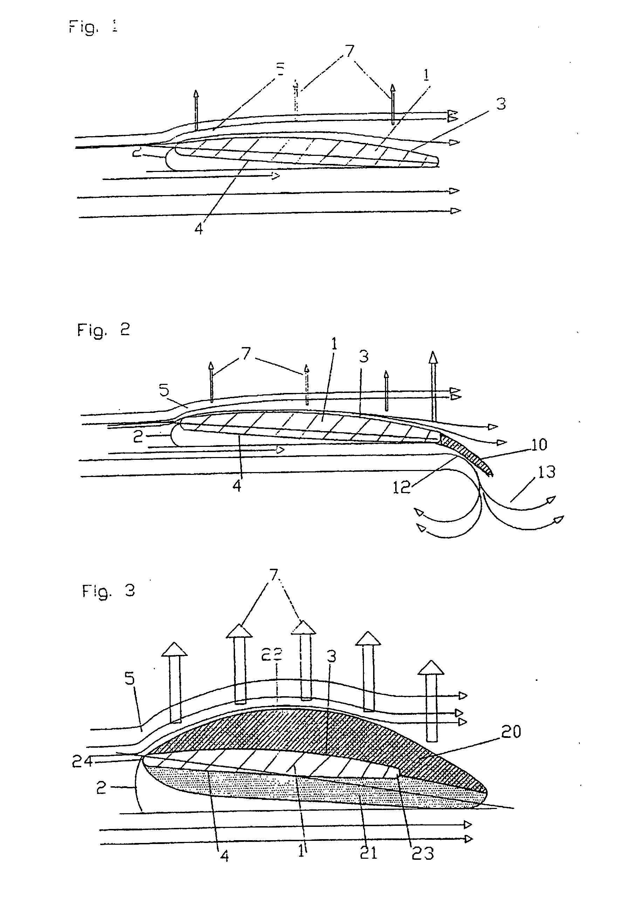

Nach dem Gesetz von Bernoulli vermindern Gase, die ihre Fließgeschwindigkeit erhöhen, ihren Druck. Tragflügelflugzeuge machen sich dieses physikalische Prinzip zunutze. Fig. 1 zeigt im Schnitt einen herkömmlichen Tragflügel 1 mit gegebenem Anstellwinkel 2. Die Oberseite 3 des Tragflügels 1 ist nach außen gewölbt. Der über die Tragflügel 1 streichende Luftstrom 5 muß an der Oberseite 3 einen größeren (längeren) Weg zurücklegen als an der Unterseite 4 des Tragflügels 1. Der dadurch an der Oberseite 3 des Tragflügels 1 entstehende Unterdruck (Auftrieb Pfeile 7 in Fig. 1) gleicht im Horizontalflug das Gewicht des Flugzeuges aus und hält es in der Luft.

Durch Ändern der Geschwindigkeit, durch Wahl des Anstellwinkels 2 und/oder der aerodynamisch wirksamen Oberfläche von Tragflügeln kann das Verhalten im Flug beeinflußt werden. Der Auftrieb, der an einem Tragflügel eines Flugzeuges entsteht, ist direkt proportional zu der dem Luftstrom ausgesetzten Grundfläche und proportional zum Quadrat der Geschwindigkeit des über diesen Tragflügel streichenden Luftstromes. Weiters ist der Auftrieb ungefähr proportional zum Anstellwinkel des Tragflügels, solange dieser im Bereich von ungefähr +/- 14 Grad bleibt. Größere Winkel führen zum sogenannten "Überziehen", das heißt zum Abreißen des Luftstromes über dem Tragflügel.

Flugzeugkonstrukteure versuchen, das bestmögliche Verhältnis von Auftrieb und Rücktrieb zu erzeugen. Da dieses Verhältnis aber von verschiedenen Faktoren, wie Gewicht des Flugzeuges oder der Geschwindigkeit der über die aerodynamisch wirksamen Flugzeugteile streichenden Luft, abhängig ist, versucht man, den Auftrieb und den Rücktrieb von Flugzeugen den jeweils herrschenden Bedingungen bzw. Einsatzbereichen anzupassen. Ein für den Unterschallbetrieb ausgelegtes Transportflugzeug hat ein Verhältnis Auftrieb/Rücktrieb von etwa 20, ein Segelflugzeug hingegen hat ein Verhältnis von 30 oder mehr. Im Überschallbereich sinkt das erzielbare Verhältnis Auftrieb/Rücktrieb auf unter 10.

Tragflügelflugzeuge sollten, um den aerodynamischen und ökonomischen Erfordernissen des Langsam- und Schnellfluges, einer erhöhten oder verminderten Traglast, einer Optimierung der Reichweite und des Treibstoffverbrauches sowie der Verwendung von langen oder kurzen Landebahnen gerecht zu werden in der Lage sein, ihr aerodynamisches Auftriebsverhalten zu verändern.

Im Stand der Technik sind Maßnahmen vorgeschlagen worden, den Auftrieb von Flugzeugtragflügeln zu verändern und an verschiedene Situationen anzupassen. Ein Vorschlag besteht in der Verwendung von aufblasbaren Tragflügeln oder Tragflügelteilen.

Andere Vorschläge (DE 20 26 054 B) betreffen bewegliche Teile im Inneren von Tragflügeln, die das Profil derselben durch Wölben der (flexiblen) Außenhaut des Tragflügels verändern sollen. Beide Möglichkeiten sind, wenn überhaupt, nur für leichte, langsam fliegende Tragflügelflugzeuge geeignet. Eine weitere, allerdings außerordentlich aufwendige und daher kostspielige Möglichkeit sind Schwenkflügel.

Fig. 2 zeigt die heute gebräuchlichste Maßnahme den Auftrieb eines Tragflügels zu verändern, nämlich die Verwendung von Landeklappen (Spreizklappen) 10. Diese Landeklappen 10 entfalten ihre Wirkung dadurch, daß sie den hinteren, manchmal auch den vorderen Teil des Tragflügels 1 nach unten verlängern. Dadurch verlängert sich auch das auftriebserzeugende Profil an der Oberseite 3 des Tragflügels 1. Dies erhöht den Auftrieb 7. Da aber an der Unterseite 4 des Tragflügels 1 bei nicht geändertem Anstellwinkel 2 ein Hohlraum 12 entsteht, bilden sich im Flug starke Turbulenzen 13, die zu dem bekannten "Rütteln" des Flugzeuges bei ausgefahrenen Klappen 10, also z.B. im Landeanflug, führen.

Solche Landeklappen 10 sind üblicherweise in Tragflügel integriert und werden im Bedarfsfall an diesen ausgefahren, können aber, wie in der DE 23 53 245 C beschrieben, auch in einer oder mehreren Kammern im Rumpf des Flugzeuges untergebracht sein und von dort in ihre Betriebsstellung neben den Tragflügelkanten (Vorderkante und Hinterkante) verstellt werden. Da aber in dieser wie in allen anderen Verwendungsarten von an Vorder- und/oder Hinterkanten von Tragflügeln wirkenden Auftriebsklappen das übrige Tragflügelprofil und der Anstellwinkel unverändert bleiben, sind dieser Form der Auftriebsveränderung enge Grenzen gesetzt.

Aus technischen sowie aus Gründen der Stabilität der Start- und Landekonfiguration kann die Oberflächenvergrößerung ein bestimmtes Maß nicht über-, der erforderliche Tragflügelquerschnitt ein bestimmtes Ausmaß nicht unterschreiten und der Tragflügelanstellwinkel nicht verändert werden. Tragflügelquerschnitt und -länge müssen ein bestimmtes Mindestmaß beibehalten. Aus Effizienzgründen, jedoch auf Kosten einer ebenfalls erstrebenswerten Vielseitigkeit in Bezug auf ihre Charakteristika, haben sich daher auf relativ enge Einsatzbereiche abgestimmte Flugzeugtypen entwickelt. Die Versuche, mit den bisher bekannten Möglichkeiten die Vielseitigkeit der möglichen Anwendungsbereiche zu vergrößern (VTOL-, STOL-, Wandel-, Schwenkflügelflugzeuge) sind, weil extrem teuer, wenig ökonomisch und auch in den bisher erzielbaren aerodynamischen Eigenschaften nicht befriedigend.

Die US 4,890,803 A zeigt und beschreibt einen Flugzeugtragflügel der eingangs genannten Gattung, der an seiner Oberseite eine im wesentlichen über seine gesamte Länge durchgehende Stufe aufweist. Die Höhe dieser Stufe an der Oberseite des Tragflügels kan durch Verschwenken eines "flap" verändert werden, um die aerodynamischen Eigenschaften des Tragflügels zu verändern. Bei der in Fig. 4 der US 4,890,803 A gezeigten Ausführungsform kann der flap in Längsrichtung des Flugzeugtragflügels verstellt werden, um ihn in einen Aufnahmeraum im unteren Teil des Rumpfes des Flugzeuges hinen bzw. aus diesem wieder heraus zu bewegen. So soll die Möglichkeit eröffentwerden, zusätzlich zu dem Verschwenken des flap um eine im Bereich der Flügelhinterkante liegenden Achse auch dessen wirksame Größe (Länge) zu verändern, um die Auftriebskraft, also die aerodynamischen Eigenschaften des Tragflügels zu verändern.

Der Erfindung liegt die Aufgabe zu Grunde, Flugzeugtragflügel der eingangs genannten Gattung zur Verfügung zu stellen, deren aerodynamisch wirksames Profil und gegebenenfalls auch deren Anstellwinkel verändert werden kann.

Erfindungsgemäß wird diese Aufgabe mit den Merkmalen des Anspruches 1 gelöst.

Bevorzugte und vorteilhafte Ausgestaltungen der Erfindung sind Gegenstand der Unteransprüche.

Mit der Erfindung kann das aerodynamisch wirksame Profil sowie, falls gewünscht, der Anstellwinkel von Flugzeugtragflügeln durch je Tragflügel wenigstens einen aus dem Rumpf des Flugzeuges und/oder aus an den Tragflügeln selbst angebrachten Behältern entlang des Tragflügels verstellbaren Flügelteil verändert und an verschiedene Erfordernisse angepaßt werden.

Der (je Tragflügel) wenigstens eine erfindungsgemäße Flügelteil kann aus mehreren Teilen bestehen, die ineinander stapelbar oder teleskopartig ausziehbar ausgebildet sein können. Der ausfahrbare Tragflügelteil kann auch aus nur einem Element, das den gesamten Umfang des fixen Tragflügels über einen Abschnitt, über dessen gesamte Länge oder diesen überragend umschließt, bestehen.

Erfindungsgemäß sind den Tragflügeln bevorzugt mehrere aerodynamisch wirksame Flügelteile zugeordnet, die entweder alleine oder gemeinsam zur Veränderung des Profils und gegebenenfalls auch des Anstellwinkels des Tragflügels, bei dem sie sich befinden, verwendet werden. Bevorzugt erhöhen die der Oberseite der Tragflügel zugeordneten Flügelteile in ihrer Wirkstellung den Auftrieb der Tragflügel. Die gegebenenfalls vorgesehenen, der Unterseite der Tragflügel zugeordneten, zusätzlichen Flügelteile dienen in ihrer Wirkstellung der Erhöhung der Stabilität, der Verbesserung der aerodynamischen Eigenschaften und vor allem zusammen mit den der Oberseite der Tragflügel zugeordneten Flügelteilen dazu, den Anstellwinkel der Tragflügel zu verändern, insbesondere zu vergrößern.

Es kann auch vorgesehen werden, daß die ausfahrbaren Flügelteile eines Flügels unabhängig von den Flügelteilen des anderen Flügels bewegbar sind, damit sie nicht nur zur (beiderseitigen und synchronen) Veränderung des Auftriebes und gegebenenfalls des Anstellwinkels der Flügel, sondern bei einseitiger Bewegung - gemeinsam mit dem Ruder - auch zu Steuerzwecken verwendet werden können.

Die erfindungsgemäß erzielbare Änderung der aerodynamischen Eigenschaften von Tragflügeln kann anstelle von oder zusätzlich zu herkömmlichen Spreiz- oder Landeklappen oder anderen Maßnahmen zum Verändern der aerodynamischen Eigenschaften von Tragflügeln erfolgen.

Mit der Erfindung werden Flügelteile für Tragflügel zur Verfügung gestellt, die insbesondere einen zum Schnellflug geeigneten Querschnitt und einen zum Schnellflug geeigneten Anstellwinkel besitzen. Die erfindungsgemäßen Flügelteile befinden sich beim Benützen des Flugzeuges im Schnellflug in einer Versorgungslage, in der sie beispielsweise innerhalb des Flugzeugrumpfes oder in an den Tragflügeln vorgesehenen Behältern aufgenommen sind. Für den Langsamflug werden die erfindungsgemäßen Flügelteile aus dem Flugzeugrumpf oder den Behältern an den Tragflächen in ihre Wirkstellung verbracht, insbesondere entlang der Tragflächen in ihre Wirkstellung ausgefahren, und verändern die Form des Tragflügels und damit dessen Auftrieb. Bei in Wirkstellung befindlichen Flügelteilen wird das aerodynamisch wirksame Profil durch das Profil der Tragflügel und durch das der Flügelteile bestimmt. Bei der Erfindung können die Flügelteile in ihrer aerodynamisch wirksamen Stellung das Profil der Tragflügel bei gleichbleibendem Anstellwinkel der Tragflügel verändern. Zusätzlich können die Flügelteile, insbesondere die der Unterseite von Tragflügeln zugeordneten Flügelteile, den Anstellwinkel der Tragflügel verändern.

Die erfindungsgemäßen Flügelteile oder (wenn je Tragflügel zwei oder mehrere Flügelteile vorgesehen sind) einzelne derselben können die Tragflügel ganz oder teilweise auf einen wählbaren Abschnitt umschließen oder aber an dessen Vorder- oder Hinterkante und/oder an der Flügelspitze über diesen hinausragen.

Um die erfindungsgemäß vorgesehenen Flügelteile raumsparend unterzubringen, können sie im zurückgezogenen Zustand (Versorgungslage) in im Flugzeugrumpf vorgesehenen Aufnahmeräumen und/oder in an den Tragflächen angebrachten Behältern ineinander gestapelt oder teleskopartig ineinander geschoben sein.

Bei der Erfindung können die Flügelteile in ihre das aerodynamisch wirksame Profil und/oder der Anstellwinkel der Tragflügel ändernde Wirklage, aus dem Flugzeugrumpf und/oder aus an den Tragflügeln angebrachten Behältern gleichzeitig ausgeschoben werden. Es besteht aber auch die Möglichkeit, Flügelteile zeitlich versetzt, sowohl aus dem Rumpf als auch aus den an den Tragflächen angebrachten Behältern in ihre Wirkstellung zu verbringen.

Es versteht sich, daß die erfindungsgemäßen Flügelteile nicht ausschließen, daß die mit ihnen ausgestatteten Tragflügel im Stand der Technik bekannte Einrichtungen, wie beispielsweise Landeklappen, aufweisen.

Die erfindungsgemäß vorgesehenen Flügelteile können anstelle oder gemeinsam mit bekannten, an den Tragflügeln angebrachten Vorrichtungen zum Steuern und/oder Trimmen des Flugzeuges verwendet werden.

Die erfindungsgemäß vorgesehenen Flügelteile können einstückig oder aus mehreren Teilen zusammengesetzt sein, die jeder für sich oder gemeinsam beweglich sind, und die in ihrer Wirkstellung die gewünschte aerodynamische Wirksamkeit entfalten.

Die Verbindung zwischen Flügelteilen und Tragflügeln kann ganz gleich, ob je Tragflügel ein Flügelteil oder zwei oder mehrere Flügelteile vorgesehen sind, durch beispielsweise formschlüssig ineinandergreifende Haltemittel (Nuten-Rippen-Paare), erfolgen.

Vorteilhaft ist es, wenn die erfindungsgemäß vorgesehenen Flügelteile in ihrer Versorgungslage mit ihrer stirnseitigen Endfläche einen Teil der Außenhülle des Flugzeugrumpfes oder einen Teil der Seitenwand der Behälter, in welchen sie aufgenommen sind, bilden.

Der je Tragflügel wenigstens eine erfindungsgemäß vorgesehene Flügelteil kann den bestehenden Tragflügel nach wenigstens einer Richtung überragen. So kann der Flügelteil den Tragflügel nach vorne, nach hinten oder über das vom Flugzeugrumpf abgekehrte Ende des Tragflügels überragen. Dabei sind Flügelteile bevorzugt, welche den Tragflügel an dessen Vorderkante und/oder an dessen Hinterkante überragen.

Die erfindungsgemäß vorgesehenen Flügelteile können an ihren den Tragflügeln eines Flugzeuges zugekehrten Flächen so geformt sein, daß sie an diesen flächig oder nur teilweise anliegen. Dabei ist es bevorzugt, daß der wenigstens eine Flügelteil an dem Tragflügel, insbesondere vorne, anliegt, damit zwischen Flügelteil und Tragflügel, an dessen Vorderkante kein Spalt vorliegt.

Wenn die erfindungsgemäß vorgesehenen Flügelteile aus mehreren Teilen bestehen, können diese unabhängig voneinander beweglich sein, um sie aus ihrer Versorgungslage in ihre Wirkstellung zu bewegen. Dabei können Flügelteile auch so ausgeführt sein, daß beispielsweise die der Oberseite der Tragflügel zugeordneten Flügelteile in Längsrichtung geteilt sind, und je einen Abschnitt aufweisen, der den Vorderkanten der Tragflügel zugeordnet ist, und je einen Abschnitt aufweisen, der den Hinterkanten der Tragflügel zugeordnet ist.

Bevorzugt ist es, daß bei mehreren Flügelteilen die Flügelteile miteinander gekuppelt sind, was beispielsweise besonders bevorzugt ist, wenn Flügelteile vorgesehen sind, die der Oberseite und der Unterseite von Tragflügeln zugeordnet sind. In diesem Fall ist es bevorzugt, wenn die Flügelteile an ihrem vorderen Rand und/oder an ihrem hinteren Rand miteinander verbunden sind. Dies ganz besonders, wenn die Flügelteile Tragflügel an deren Vorderkanten und/oder Hinterkanten überragen und an den Tragflügeln nicht flächig anliegen.

Die Erfindung löst die genannte Aufgabe durch Verstellen von einem oder mehreren, dann bevorzugt teleskopartig angeordneten, Element(en) aus einer Versorgungslage heraus in eine aerodynamische Wirkstellung, wodurch gleichzeitig der Querschnitt des Tragflügels und/oder dessen Anstellwinkel verändert werden kann. Der wenigsstens eine ausfahrbare Tragflügelteil kann dabei aus einem Teil bestehen, der einen Abschnitt oder die Gesamtheit des fixen Flügels umschließt oder diesen überragt und so geformt ist, daß in Wirkstellung ein veränderter Tragflügelquerschnitt und/oder -anstellwinkel entsteht, oder aus mehreren Teilprofilen bestehen, die miteinander das gewünschte Gesamtprofil und den neuen Anstellwinkel des Tragflügels in Langsamflugkonfiguration ergeben, bestehen. Die erfindungsgemäße Lösung ermöglicht eine ökonomisch einfache Konstruktion (Klappen und Querruder können eingespart werden), ist mechanisch problemlos und statisch unbedenklich (der fixe Tragflügel stützt die beweglichen Teile in jeder Phase), und erlaubt eine grundlegende und gleichzeitige Änderung von Tragflügelprofil und/oder -anstellwinkel sowie, durch asynchrone Bewegung der beweglichen Teile in Wirkstellung Steuerimpulse.

Weitere Einzelheiten und Merkmale sowie Vorteile der Erfindung ergeben sich aus der nachstehenden Beschreibung von Ausführungsbeispielen der Erfindung an Hand der Zeichnungen. Es zeigt:
Fig. 3 im Querschnitt einen Tragflügel mit seiner Oberseite und seiner Unterseite zugeordneten Flügelteilen,
Fig. 4 in Ansicht von vorne ein Flugzeug mit je Tragflügel zwei eingefahrenen Flügelteilen,
Fig. 5 das Flugzeug mit eingefahrenen Flügelteilen, wobei der Oberseite der Tragflügel zweiteilig ausgebildete Flügelteile und der Unterseite dreiteilig ausgebildete Flügelteile zugeordnet sind,
Fig. 6 das Flugzeug mit zur Gänze ausgefahrenen Flügelteilen,
Fig. 7 schematisch ein Flugzeug mit zwei Tragflügeln und zwei Flügelteilen, die der Oberseite der Tragflügel zugeordnet sind,
Fig. 8 ein Flugzeug mit zwei obenliegenden ineinandergeschobenen Flügelteilen in Versorgungslage,
Fig. 9 das Flugzeug mit je Tragflügel nur einem ausgeschobenen Flügelteil,
Fig. 10 und 11 ein Flugzeug mit zwei Tragflügeln, wobei die Flügelteile der Ober- und der Unterseite der Tragflügel zugeordnet sind, und nicht bzw. teilweise oder zur Gänze ausgefahren sind,
Fig. 12 bis 14 eine andere Ausführungsform mit nicht oder nur teilweise ausgefahrenen Flügelteilen,
Fig. 15 eine Ausführungsform eines Flugzeuges mit Flügelteilen, die an der Oberseite und der Unterseite der Tragflügel in Stellung gebracht werden können,
Fig. 16 das Flugzeug aus Fig. 15, wobei auch die der Unterseite der Tragflügel zugeordneten Flügelteile ausgefahren sind,
Fig. 17 eine Ausführungsform (schematisch) mit an den Tragflügeln angeordneten Behältern für die Aufnahme von Flügelteilen, die
Fig. 18 bis 22 im Querschnitt Tragflügel mit ihnen zugeordneten Flügelteile in verschiedenen Ausführungsformen und
Fig. 23 eine weitere Ausführungsform.

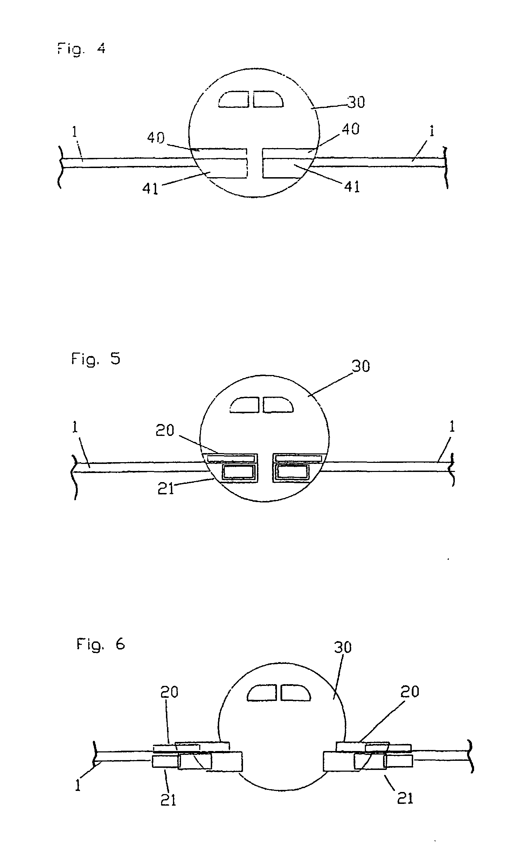

In Fig. 3 ist in einem Ausführungsbeispiel gezeigt, wie erfindungsgemäß Flügelteile 20 und 21 der Oberseite 3 und der Unterseite 4 eines Tragflügels 1 zugeordnet werden können.

Durch das Ausfahren (oder Ausschwenken) von im Beispiel von Fig. 3 zwei aerodynamisch wirksamen Flügelteilen 20 und 21 aus dem Flugzeugrumpf wird der aerodynamisch wirksame Querschnitt des Tragflügels 1 verändert. Es ergibt sich eine große, aerodynamisch nutzbare Wölbung der (oberen) Tragflügeloberfläche 22, und damit ein für Langsamflug strömungsoptimiertes Tragflügelprofil, das sich aerodynamisch wirksam aus den Flügelteilen 20, 21 und dem Tragflügel 1 zusammensetzt.

Fig. 3 zeigt als Beispiel, daß zwei aerodynamisch wirksame Flügelteile 20 und 21 im ausgefahrenen Zustand den Tragflügel 1 auf eine wählbare Länge umschließen und über die hintere Tragflügelkante 23 hinausragen. Die erfindungsgemäßen Flügelteile 20 und 21 können sich über einen Teil oder über die gesamte Länge des Tragflügels 1 erstrecken, oder über diesen seitlich hinausragen.

Des weiteren können sich die Flügelteile 20 und 21 (oder nur einer derselben) von der Vorderkante 24 eines Tragflügels 1 bis zu dessen Hinterkante 23 erstrecken (siehe Fig. 3), oder aber die Flügelteile 20 und 21 (oder nur einer derselben) enden im Abstand von der Vorderkante 24 und/oder der Hinterkante 23 des Tragflügels 1 (sie stehen über oder sie reichen nicht bis zur vorderen oder hinteren Kante).

Dabei erzeugen die Flügelteile 20 und 21 einen höheren Auftrieb 7 als der Tragflügel 1 allein.

Die Flügelteile 20, 21 sind im Beispiel von Fig. 3 in ihrer Querschnittsform so ausgebildet, daß sie im ausgefahrenen Zustand ein verändertes Gesamt-Tragflügelprofil ergeben. Dadurch vergrößert sich auch der Anstellwinkel 2 des Tragflügels 1. Die daraus resultierenden aerodynamischen Charakteristika erlauben (extremen) Langsamflug bei großer Stabilität, das Befördern großer Nutzlasten oder das Benützen (extrem) kurzer Landebahnen. Nach dem Einfahren der beweglichen Flügelteile 20, 21 bleibt nur der relativ kurze und in seinem Querschnitt und Anstellwinkel für hohe Geschwindigkeiten ausgelegte (Grund-) Tragflügel 1 aerodynamisch wirksam. Durch den auf diese Weise erzeugten, geringen Rücktrieb werden für das selbe Flugzeug hohe Geschwindigkeiten bei großen Reichweiten und große Treibstoffeffizienz möglich.

Nach dem Gesetz von Bernoulli ist für das Fliegen im unteren Geschwindigkeitsbereich die Tropfenform die optimale Form des Querschnittes eines Tragflügels. Dies gilt aber nur für Fluggeschwindigkeiten im Unterschall-Geschwindigkeitsbereich. Bei Annäherung an die bzw. Überschreiten der Schallmauer ist diese Form hinderlich, weil die bei Annäherung an die Schallmauer entstehenden Stoßwellen mit großer Amplitude ein sehr hohes Maß an Rücktrieb erzeugen. Bei Schallgeschwindigkeit bilden diese Stoßwellen annähernd eine Ebene. Bei Mach 1,4 beträgt der Stoßwellenwinkel ungefähr 90, bei ca. Mach 2,5 rund 50 Grad.

Nach der Flächenregel von Richard Travis Whitcomb ist der Luftwiderstand eines Flugzeuges im Geschwindigkeitsbereich der Schallgrenze abhängig von der Verteilung der gesamten Querschnittsfläche entlang des Luftfahrzeuges. Um diesen Rücktrieb an bzw. über der Schallgrenze zu verringern, versucht man, die der anströmenden Luft entgegenstehende Stirnseite so klein wie möglich zu gestalten. Aus diesem Grund besitzen schnellfliegende Flugzeuge Tragflügel mit schmalen, klingenförmigen Tragflügelvorderkanten, einen schlanken Rumpf und einen möglichst kleinen Tragflügelquerschnitt.

Um mit den Tragflügelenden nicht in die sich bei Annäherung an die Schallmauer aufbauenden und kegelförmig nach hinten verlaufenden Stoßwellen zu gelangen, weisen diese Flugzeuge oft eine starke Pfeilform der Tragflügel auf (z.B. McDonnell Douglas F15).

Da mit bekannten Landeklappen die aerodynamischen Eigenschaften von Tragflügeln in einem nur beschränkten Ausmaß verändert werden können, haben diese konstruktiven Merkmale die Folge, daß die Nutzlast klein, die Reichweite gering und die Start- und Landegeschwindigkeit hoch ist. Im unteren Geschwindigkeitsbereich und/oder bei höheren Nutzlasten kann der erforderliche Auftrieb nicht erzeugt werden. Daher können (sehr) kurze Landebahnen nicht benützt werden. Im niederen Geschwindigkeitsbereich ist die beschriebene Tragflügel-Konfiguration suboptimal. Flugzeuge, die sowohl für Unter- als auch Überschallflüge (z.B. Rockwell B-1B oder Concorde) stellen derzeit Kompromisse der Effizienz sowohl im Unterschall- als auch im Überschallgeschwindigkeitsbereich dar. Die Erfindung löst auch dieses Problem.

Fig. 4 zeigt schematisch und von vorne gesehen ein Flugzeug mit einem Rumpf 30 und zwei Tragflügeln 1, wobei Aufnahmeräume 40 und 41 für Flügelteile in ihrer Versorgungslage, also in ihrer nicht wirksamen Stellung, dargestellt sind.

Fig. 5 zeigt das Flugzeug aus Fig. 4, wobei die Flügelteile 20 und 21 in den Aufnahmeräumen 40, 41 dargestellt sind.

Fig. 6 zeigt das Flugzeug von Fig. 4 und 5, wobei sowohl die Flügelteile 20 an der Oberseite 3 der Tragflügel 1 als auch die Flügelteile 21 an der Unterseite 4 der Tragflügel 1 in ihre Wirkstellung ausgefahren sind.

Die Fig. 5 und 6 zeigen, daß jeder der Flügelteile 20 und 21 in diesem Beispiel aus mehreren Teilen besteht, die in ihrer Versorgungslage in den Aufnahmeräumen 40 bzw. 41 teleskopartig ineinander geschoben sind. In ihrer in Fig. 6 gezeigten Wirklage sind die einzelnen Teile der Flügelteile 20 und 21 auseinander gefahren, um eine möglichst große wirksame Länge derselben zu erreichen.

Es versteht sich, daß auch bei der in den Fig. 4 bis 6 gezeigten Ausführungsform die Flügelteile 20 und 21 bis an die (nicht gezeigten) Spitzen der Tragflügel 1 reichen oder über diese hinausragen können.

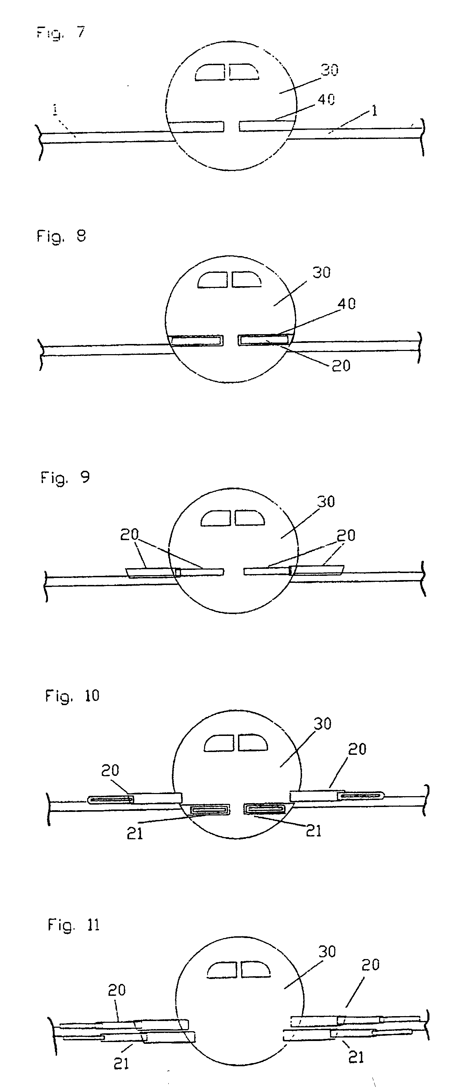

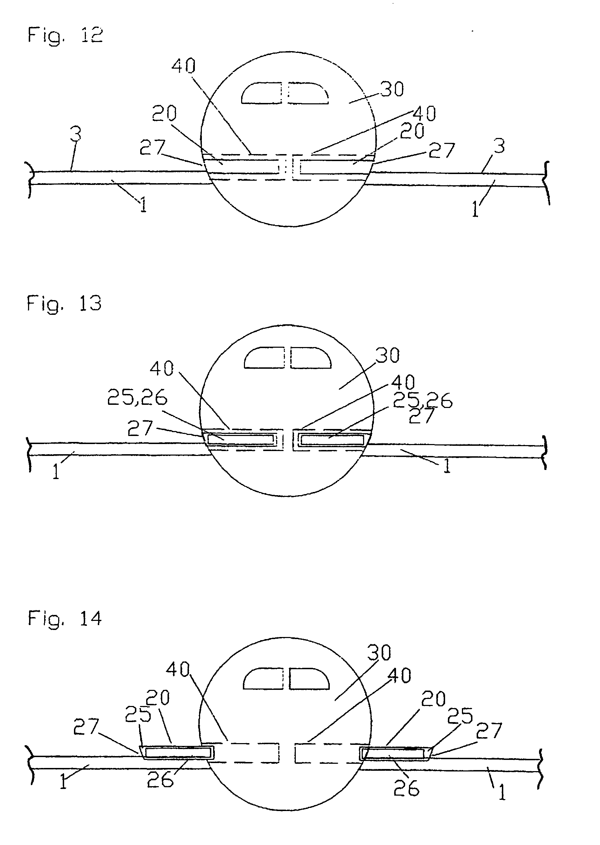

Die Fig. 7 bis 9 zeigen eine Ausführungsform, bei der im Rumpf 30 eines Flugzeuges mit zwei Tragflügeln 1 lediglich zwei Aufnahmeräume 40 für Flügelteile 20 vorgesehen sind. Diese Flügelteile 20 können aus der in den Fig. 7 bzw. 8 gezeigten Versorgungslage (Nicht-Wirkstellung) in ihre Wirkstellung gemäß Fig. 9 ausgefahren werden, wobei Fig. 9 zeigt, daß die Flügelteile 20 auch nur teilweise ausgefahren werden können.

Fig. 7 bis 9 zeigen auch, daß die äußeren Enden der Flügelteile oder Teile davon einen Teil der Verkleidung (Aussenhaut) des Rumpfes 30 des Flugzeuges bilden. Dies ist auch für die übrigen Ausführungsformen gemäß den Fig. 4 bis 16 und 10 bis 17 so dargestellt. Diese Ausführungsform ergibt den Vorteil, daß bei in ihre Versorgungslage zurückgezogenen Flügelteile 21 eine glatte und strömungsgünstige Außenform des Rumpfes 30 erhalten bleibt.

Fig. 10 zeigt, daß die Flügelteile 20 und 21 auch nur teilweise ausgefahren werden können, wobei bei der in Fig. 10 gezeigten Stellung die der Oberseite 3 der Tragflügel 1 zugeordneten Flügelteile 20 teilweise, und die der Unterseite 4 der Tragflügel 1 zugeordneten Flügelteile 21 überhaupt nicht ausgefahren sind. Fig. 11 zeigt, daß die Möglichkeit besteht, die Flügelteile 20 und 21 bei Bedarf auch zur Gänze auszufahren.

Die Fig. 12 bis 14 zeigen eine Ausführungsform eines Flugzeuges mit Rumpf 30 und Tragflügeln 1, wobei lediglich der Oberseite 3 der Tragflügel 1 zugeordnete Flügelteile 20 vorgesehen sind. Diese Flügelteile 20 sind in Fig. 12 in ihrer Versorgungslage, also in den Aufnahmeräumen 40, dargestellt, wobei in Fig. 12 auch gezeigt ist, daß die äußeren Endflächen 27 des einen Teils 25 der Flügelteile 20, der den zweiten Teil 26 teleskopartig eingeschoben in sich aufnimmt, in der Versorgungslage gemäß Fig. 12 je einen mit der Außenhaut des Rumpfes 30 des Flugzeuges bündigen Verschluß für die Aufnahmeräume 40 bilden.

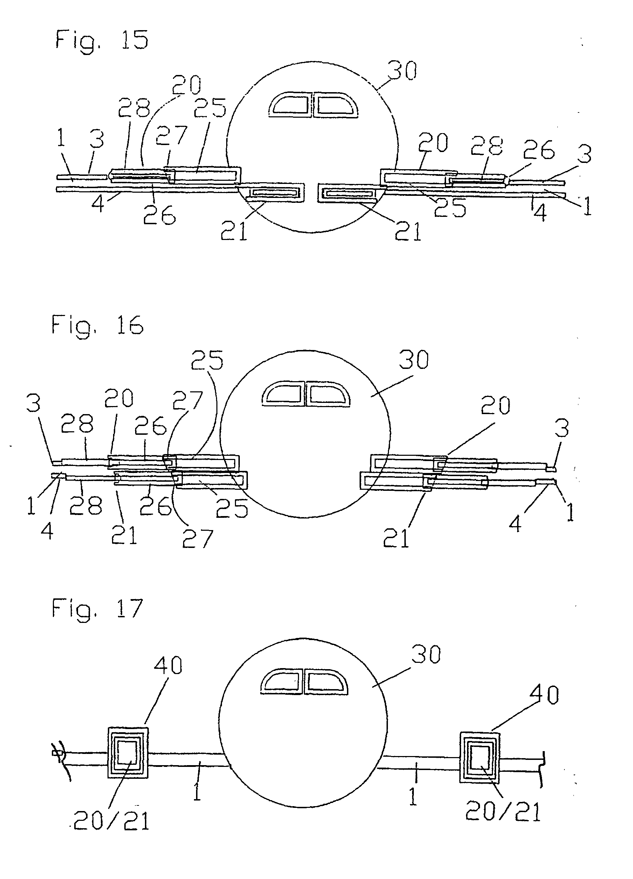

Die Fig. 15 und 16 zeigen eine Ausführungsform des Flugzeuges mit Rumpf 30 und zwei Tragflügeln 1, wobei den Tragflügeln 1 Flügelteile 20 und 21 zugeordnet sind. Die Flügelteile 20 sind in der Stellung von Fig. 15 teilweise ausgefahren, wogegen die Flügelteile 21, die der Unterseite 4 der Tragflügel 1 zugeordnet sind, in ihrer Versorgungsstellung im Inneren des Rumpfes 30 des Flugzeuges aufgenommen sind. Fig. 16 zeigt das Flugzeug aus Fig. 15 mit vollständig ausgefahrenen Flügelteilen 20 und 21, die jeweils aus drei ineinander schiebbaren (z.B. teleskopartig ineinander verschiebbaren) Teilen 25, 26 und 28 bestehen können.

Fig. 17 zeigt eine Ausführungsform eines Flugzeuges mit Rumpf 30 und Tragflügeln 1, wobei die Flügelteile 20, 21 zum Verändern des aerodynamisch wirksamen Querschnittes der Tragflügel 1 in Behältern 40 untergebracht sind (Versorgungslage), die an den Tragflügeln 1 befestigt sind.

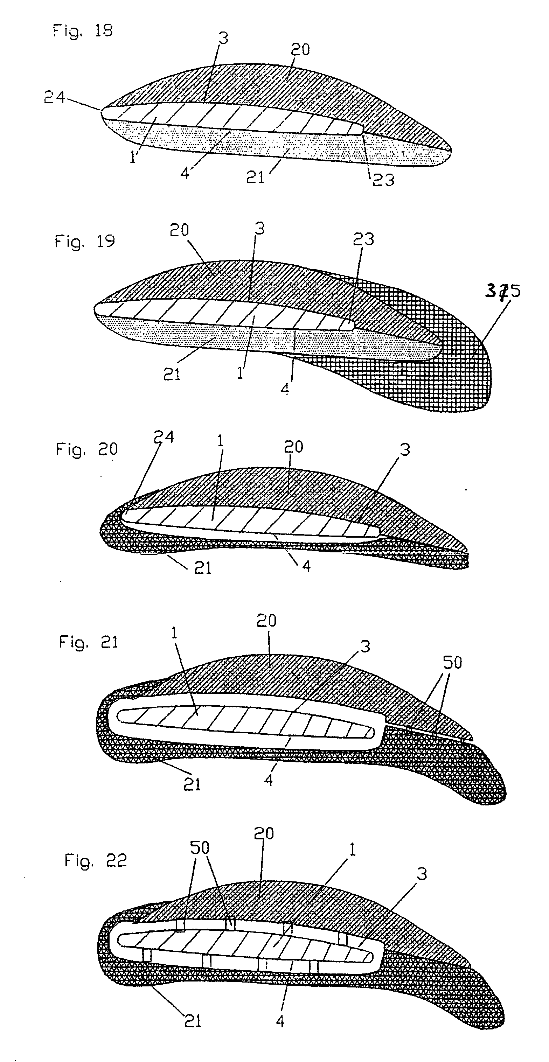

In den Fig. 18 bis 23 sind verschiedene Ausführungsformen von Flügelteilen an Tragflügeln 1 gemäß der Erfindung im Querschnitt dargestellt.

Fig. 18 zeigt eine Ausführungsform, bei der einem Tragflügel 1 ein an seiner Oberseite 3 anliegender Flügelteil 20 und ein an seiner Unterseite 4 anliegender Flügelteil 21 zugeordnet ist. Die Flügelteile 20 und 21 der Fig. 18 erstrecken sich von der Vorderkante 24 des Tragflügels 1 nach hinten und überragen die Hinterkante 23 des Tragflügels 1, wobei die Flügelteile 20 und 21 in dem über die Hinterkante 23 des Tragflügels 1 überstehenden Bereich aneinander anliegen und vorzugsweise dort miteinander verbunden sind.

Fig. 19 zeigt eine Abwandlung der Ausführungsform von Fig. 18, wobei zusätzlich zu den beiden Flügelteilen 20 und 21 ein Zusatz-Flügelteil 35 vorgesehen ist, die die beiden Flügelteile 20 und 21 im Bereich der Hinterkante 23 des Tragflügels 1 umgreift. Durch den Zusatz-Flügelteil 35 in Kombination mit den Flügelteilen 20 und 21 wird ein aerodynamisch wirksamer Profilquerschnitt erreicht, der besonders für extremen Langsamflug geeignet ist. Der Zusatz-Flügelteil 35 kann gleichzeitig mit den Flügelteilen 20, 21 in seine Wirkstellung verbracht werden. Es besteht aber auch die Möglichkeit, den Zusatz-Flügelteil 35 in seine Wirkstellung zu bewegen, nachdem die Flügelteile 20, 21 bereits in ihre Wirkstellung verstellt worden sind.

Bei der in Fig. 20 gezeigten Ausführungsform ist der Flügelteil 20 an der Oberseite 3 des Tragflügels 1 flächig aufliegend ausgebildet, wogegen der Flügelteil 21 an der Unterseite 4 des Tragflügels 1 im Abstand von dieser angeordnet ist. Im Bereich der Vorderkante 24 des Tragflügels 1 umgreif der Flügelteil 21 die Vorderkante 24 des Tragflügels 1 und ragt bis auf den dort angeordneten Bereich (vorderen Bereich) des Flügelteils 20.

Die Fig. 21 zeigt eine ähnliche Ausführungsform wie Fig. 20, wobei der oberhalb des Tragflügels 1 angeordnete Flügelteil 20 ebenfalls im Abstand von der Oberseite 3 des Tragflügels 1 angeordnet ist. Fig. 21 zeigt auch, daß die Flügelteile 20 und 21 in ihrem den Tragflügel 1 nach hinten überragenden Bereich aneinander anliegen und miteinander durch Verbindungsmittel 50 verbunden sein können.

Fig. 22 zeigt eine Ausführungsform, ähnlich der von Fig. 21, wobei zwischen dem Tragflügel 1 und den Flügelteilen 20 und 21 Verbindungsmittel 50 schematisch dargestellt sind.

Solche Verbindungsmittel 50 können bei allen gezeigten Ausführungsformen von Flügelteilen 20, 21 und bei den Zusatz-Flügelteilen 35 vorgesehen sein, und es handelt sich bevorzugt um formschlüssig ineinandergreifende Verbindungen, die eine Relativverschiebung der Flügelteile 20, 21 (und 35) zueinander und gegenüber dem Tragflügel 1 gestatten. Beispielsweise sind in den Tragflügeln 1 hinterschnittene Nuten vorgesehen (z.B. Nuten mit schlüssellochförmigem Querschnitt), in die an den Flügelteilen vorgesehene Kupplungsleisten mit entsprechendem Querschnitt, z.B. mit schlüssellochförmigem Querschnitt, eingreifen und in Längsrichtung verschiebbar sind. Ähnliche formschlüssig ineinandergreifende Verbindungsmittel, die eine Relativbewegung in Richtung der Längserstreckung der Flügel erlauben, können auch zwischen den einzelnen Teilen 25, 26, 28 von Flügelteilen 20, 21 vorgesehen sein.

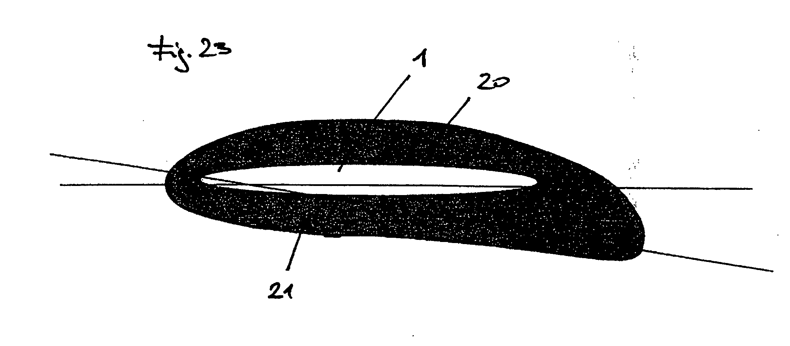

Fig. 23 zeigt eine Ausführungsform, bei welcher der wenigstens eine der Oberseite der Tragflügel 1 zugeordnete Flügelteil 20 mit dem wenigstens einen der Unterseite der Tragflügel 1 zugeordneten Flügelteil 21 einstückig ausgebildet oder mit diesem (starr) verbunden ist. Auch bei dieser Ausführungsform kann zwischen dem Tragflügel 1 und den Flügelteilen oben und/oder unten ein Abstand (vgl. Fig. 20 bis 22) vorliegen.

Die Flügelteile 20, 21 können aus den Aufnahmeräumen 40, 41 oder den Behältern 40 in ihre Wirkstellung ausgefahren werden.

Flügelteile, die in Behältern 40 an den Tragflügeln 1 untergebracht werden können, können mit Flügelteilen, die in Aufnahmeräumen 40, 41 im Rumpf 30 eine Flugzeuges vorgesehen sind, kombiniert werden.

Durch die aus dem Rumpf 30 oder aus an den Tragflügeln 1 angebrachten Aufnahmeräumen bzw. Behältern 40 ausfahrbaren, aerodynamisch wirksamen Flügelteile 20, 21 und gegebenenfalls durch zusatz-Flügelteile 35 ist das Tragflügelprofil nahezu frei gestaltbar. Dies bedeutet, daß in Schnellflugkonfiguration (mit in Versorgungslage eingefahrenen Flügelteilen 20, 21) mit einer sehr geringen Tragflügelspannweite und mit einem sehr geringen Tragflügelquerschnitt und schmaler Tragflügelvorderkante des Grundtragflügels 1 sehr hohe Geschwindigkeiten erreichbar sind. In Langsamflugkonfiguration bei in Wirkstellung befindlichen Flügelteilen ist ein überaus großer und mit den bisher bekannten Maßnahmen nicht erreichbarer Tragflügelquerschnitt und damit auch hoher aerodynamischer Auftrieb erzielbar. Sehr hohen Geschwindigkeiten hingegen steht bei eingefahrenen Flügelteilen 20, 21 kein unerwünschter Auftrieb bzw. Rücktrieb sowie kein unerwünscht hoher Anstellwinkel entgegen. Die bei Verwendung der erfindungsgemäß vorgesehenen Flügelteile möglichen, kurzen Flügelspannweiten verhindern, daß die Tragflügelenden in die sich bei Annäherung an die bzw. Durchstoßung der Schallmauer bildenden Stoßwellen hineinragen und so die Stabilität des Luftfahrzeuges beeinträchtigen.

Auswirkungen der erfindungsgemäßen Ausbildung von Flugzeugtragflügeln mit Flügelteilen sind beispielsweise folgende:
Bei niedrigen Geschwindigkeiten und/oder kurzen Landebahnen und/oder hoher Nutzlast werden die erfindungsgemäß vorgesehenen Flügelteile 20, 21 und gegebenenfalls die Zusatz-Flügelteile 35 voll ausgefahren, um das größtmögliche Maß an Auftrieb zu erzeugen.

Beim Erreichen höherer Geschwindigkeiten werden die Flügelteile eingefahren und sind im voll eingefahrenen Zustand im Rumpf oder in an den Tragflügeln befindlichen Aufnahmeräumen/Behältern weitgehend oder vollständig aufgenommen. Aerodynamisch wirksam bleibt dann nur noch der sehr kurze und mit einem sehr geringen Querschnitt und kleinen Anstellwinkel ausgestattete Grundtragflügel sowie, wenn solche vorgesehen werden, die an den Tragflügeln 1 angebrachten Behälter 40 für die Flügelteile 20, 21.

Damit werden Spitzengeschwindigkeiten möglich, die mit konventionellen, für den Einsatz im Unterschallbereich konstruierten Tragflügelprofilen und -anstellwinkeln sonst nicht erreichbar sind.

Zusammenfassend kann ein bevorzugtes Ausführungsbeispiel der Erfindung wie folgt beschrieben werden:
Flugzeugtragflügeln 1, insbesondere Traf lügeln mit zum Schnellflug geeignetem Querschnitt und Anstellwinkel, sind deren Auftrieb beeinflussende Flügelteile 20, 21 zugeordnet, die aus einer aerodynamisch unwirksamen Versorgungslage im Inneren des Flugzeugrumpfes 30 oder aus in an den Tragflügeln 1 angebrachten Kammern 40 in eine aerodynamisch wirksame Wirkstellung und aus der Wirkstellung zurück in die Versorgungslage verstellbar sind. Solche Flügelteile 20, 21 sind in ihrer Wirkstellung an der Oberseite 3 und gegebenenfalls auch an der Unterseite 4 der Tragflügel 1 angeordnet und beispielsweise so geformt, daß sich wenigstens je ein Flügelteil 20, 21 an der Oberseite und/oder an der Unterseite der Tragflügel 1 in seiner wirkstellung mindestens über den Großteil der Breite des Tragflügels zwischen seiner Vorderkante 24 und seiner Hinterkante 23 erstreckt, und daß die in ihrer Wirkstellung an der Unterseite 4 der Tragflügel 1 angeordneten Flügelteile 21 bevorzugt gemeinsam mit in ihrer Wirkstellung an der Oberseite 3 der Tragflügel 1 angeordneten Flügelteilen 20 den Auftrieb und gegebenenfalls gleichzeitig den Anstellwinkel des Tragflügels 1 verändern, insbesondere vergrößern.

## Patentansprüche

1. Flugzeugtragflügel (1), insbesondere Tragflügel (1) mit zum Schnellflug geeignetem Querschnitt und Anstellwinkel, wobei den Tragflügeln (1) deren Auftrieb beeinflussende Flügelteile (20, 21) zugeordnet sind, die aus einer aerodynamisch unwirksamen Versorgungslage in eine aerodynamisch wirksame Wirkstellung und aus der Wirkstellung zurück in die Versorgungslage verstellbar sind, **dadurch gekennzeichnet, daß** Flügelteile (20, 21) in ihrer Wirkstellung an der Oberseite (3) und/oder an der Unterseite (4) der Tragflügel (1) angeordnet sind, daß sich wenigstens je ein Flügelteil (20, 21) an der Oberseite und/oder an der Unterseite der Tragflügel (1) in seiner Wirkstellung mindestens über den Großteil der Breite des Tragflügels (1) zwischen seiner Vorderkante (24) und seiner Hinterkante (23) erstreckt, und daß die in ihrer Wirkstellung angeordneten Flügelteile (20) den Auftrieb der Tragflügel (1) vergrößern und den Anstellwinkel (2) der Tragflügel (1) verändern, insbesondere vergrößern.

2. Tragflügel nach Anspruch 1, **dadurch gekennzeichnet, daß** die in ihrer Wirkstellung an der Oberseite (3) der Tragflügel (1) angeordneten Flügelteile (20) den Auftrieb des Tragflügels (1) vergrößern.

3. Tragflügel nach Anspruch 1 oder 2, **dadurch gekennzeichnet, daß** die in ihrer Wirkstellung an der Unterseite (4) der Tragflügel (1) angeordneten Flügelteile (21) gemeinsam mit in ihrer Wirkstellung an der Oberseite (3) der Tragflügel (1) angeordneten Flügelteilen (20) den Anstellwinkel (2) der Tragflügel (1) verändern, insbesondere vergrößern.

4. Tragflügel nach einem der Ansprüche 1 bis 3, **dadurch gekennzeichnet, daß** sich Flügelteile (20, 21) über einen Teil der Länge der Tragflügel (1) erstrecken.

5. Tragflügel nach einem der Ansprüche 1 bis 4, **dadurch gekennzeichnet, daß** sich Flügelteile (20, 21) von der Vorderkante (24) bis zur Hinterkante (23) der Tragflügel (1) erstrecken.

6. Tragflügel nach einem der Ansprüche 1 bis 4, **dadurch gekennzeichnet, daß** Flügelteile (20, 21) von den Vorderkanten (24) der Tragflügel (1) ausgehen und über die Hinterkanten (23) der Tragflügel (1) nach hinten überstehen.

7. Tragflügel nach einem der Ansprüche 1 bis 4, **dadurch gekennzeichnet, daß** Flügelteile (20, 21) über die Vorderkanten (24) der Tragflügel (1) nach vorne überstehen und bis zu den Hinterkanten (23) der Tragflügel (1) reichen.

8. Tragflügel nach einem der Ansprüche 1 bis 4, **dadurch gekennzeichnet, daß** Flügelteile (20, 21) über die Vorderkanten (24) der Tragflügel (1) nach vorne und über die Hinterkanten (23) der Tragflügel (1) nach hinten überstehen.

9. Tragflügel nach einem der Ansprüche 1 bis 8, **dadurch gekennzeichnet, daß** sich Flügelteile (20, 21) über die gesamte Länge der Tragflügel (1) erstrecken.

10. Tragflügel nach einem der Ansprüche 1 bis 9, **dadurch gekennzeichnet, daß** Flügelteile (20, 21) über die äußeren Enden der Tragflügel (1) überstehen.

11. Tragflügel nach einem der Ansprüche 1 bis 10, **dadurch gekennzeichnet, daß** Flügelteile (20, 21) aus/in Aufnahmeräumen (40, 41) im Inneren des Flugzeugrumpfes (30) oder aus/in an den Tragflügeln (1) angeordneten Kammern (40) verstellbar sind.

12. Tragflügel nach einem der Ansprüche 1 bis 11, **dadurch gekennzeichnet, daß** Flügelteile (20, 21) mehrteilig (25, 26, 28) ausgebildet sind.

13. Tragflügel nach Anspruch 12, **dadurch gekennzeichnet**, daß- die Teile (25, 26, 28) von Flügelteilen (20, 21) teleskopartig ineinander- bzw. auseinanderschiebbar sind.

14. Tragflügel nach einem der Ansprüche 1 bis 13, **dadurch gekennzeichnet, daß** Flügelteile (20) der Oberseite (3) und Flügelteile (21) der Unterseite (4) der Tragflügel (1) zugeordnet sind.

15. Tragflügel nach einem der Ansprüche 1 bis 14, **dadurch gekennzeichnet, daß** die den Tragflügeln (1) zugekehrten Flächen von Flügelteilen (20, 21) kongruent zur Profilform der Oberseite (3) und/oder der Unterseite (4) der Tragflügel (1) geformt sind.

16. Tragflügel nach einem der Ansprüche 1 bis 15, **dadurch gekennzeichnet, daß** Flügelteile (20, 21) wenigstens teilweise an der Oberseite (3) und/oder der Unterseite (4) der Tragflügel (1) anliegen.

17. Tragflügel nach einem der Ansprüche 1 bis 15, **dadurch gekennzeichnet, daß** Flügelteile (21) im Abstand von der Unterseite (4) der Tragflügel (1) angeordnet sind.

18. Tragflügel nach einem der Ansprüche 1 bis 15, **dadurch gekennzeichnet, daß** Flügelteile (20) im Abstand von der Oberseite (3) der Tragflügel (1) angeordnet sind.

19. Tragflügel nach einem der Ansprüche 6 bis 18, **dadurch gekennzeichnet, daß** Flügelteile (20, 21) in ihren über die Vorderkante (24) und/oder die Hinterkante (23) der Tragflügel (1) überstehenden Abschnitten aneinander anliegen.

20. Tragflügel nach Anspruch 19, **dadurch gekennzeichnet, daß** Flügelteile (20, 21) im Bereich ihrer aneinander anliegenden Abschnitte miteinander verbunden sind.

21. Tragflügel nach einem der Ansprüche 1 bis 20, **dadurch gekennzeichnet, daß** im Bereich der Vorderkante (24) und/oder im Bereich der Hinterkante (23) der Tragflügel (1) wenigstens ein Zusatz-Flügelteil (35) vorgesehen ist.

22. Tragflügel nach Anspruch 21, **dadurch gekennzeichnet, daß** der Zusatz-Flügelteil (35) die Flügelteile (20, 21) von vorne und/oder von hinten übergreifend angeordnet ist.

23. Tragflügel nach einem der Ansprüche 1 bis 22, **dadurch gekennzeichnet, daß** Flügelteile (20, 21) einander im Bereich der Vorderkante (24) und/oder der Hinterkante (23) der Tragflügel (1) übergreifend ausgebildet sind.

24. Tragflügel nach einem der Ansprüche 1 bis 23, **dadurch gekennzeichnet, daß** der Unterseite (4) der Tragflügel (1) zugeordnete Flügelteile (21) und/oder der Oberseite (3) der Tragflügel (1) zugeordnete Flügelteile (20) die Vorderkanten (24) und/oder die Hinterkanten (23) der Tragflügel (1) übergreifend ausgebildet sind.

25. Tragflügel nach einem der Ansprüche 1 bis 24, **dadurch gekennzeichnet, daß** Verbindungsmittel (50) vorgesehen sind, mit welchen Flügelteile (20, 21, 35) miteinander und/oder mit den Tragflügeln (1) verschiebbar gekuppelt sind.

26. Tragflügel nach Anspruch 25, **dadurch gekennzeichnet, daß** die Verbindungsmittel (50) ineinandergreifende Nut-Rippen-Führungen sind.

27. Tragflügel nach Anspruch 26, **dadurch gekennzeichnet, daß** die Nuten hinterschnittene Nuten sind und die Rippen entsprechend gegengleich profiliert sind.

28. Tragflügel nach einem der Ansprüche 1 bis 27, **dadurch gekennzeichnet, daß** der wenigstens eine der Oberseite (3) der Tragflügel (1) zugeordnete Flügelteil (20) mit dem wenigstens einen der Unterseite (4) der Tragflügel (1) zugeordneten Flügelteil (21) verbunden ist.

29. Tragflügel nach Anspruch 28, **dadurch gekennzeichnet, daß** die Flügelteile (20) mit den Flügelteile (21) einstückig ausgebildet sind.

30. Tragflügel nach einem der Ansprüche 1 bis 29, **dadurch gekennzeichnet, daß** der wenigstens eine Flügelteil (20, 21) eines Tragflügels (1) unabhängig von den Flügelteilen (20, 21) des anderen Tragflügels (1) in die Wirkstellung verstellbar ist.

31. Tragflügel nach einem der Ansprüce 1 bis 30, **dadurch gekennzeichnet, daß** die den Tragflügeln (1) zugeordneten Flügelteile (20, 21) einzeln und, um Steuerimpulse zu ermöglichen, asynchron bewegt werden können.

## Claims

1. Aircraft tail planes (1), in particular tail planes (1) with a cross-section and angle of attack suitable for rapid flight, wherein wing parts (20, 21) are assigned to the tail planes (1) to influence their lift, and the wing parts may be shifted from an aerodynamically ineffective supply position into an aerodynamically effective active position and from the active position back into the supply position, **characterised in that** wing parts (20, 21) are disposed in their active position on the upper side (3) and/or on the underside (4) of the tail planes (1), that at least one respective wing part (20, 21) on the upper side and/or on the underside of the tail planes (1) in its active position extends at least over the greater part of the width of the tail plane (1) between its leading edge (24) and its trailing edge (23), and that the wing parts (20) disposed in their active position increase the lift of the tail planes (1) and vary, in particular increase, the angle of attack (2) of the tail planes (1).

2. Tail planes according to Claim 1, **characterised in that** the wing parts (20) disposed in their active position on the upper side (3) of the tail p lanes (1) increase the lift of the tail plane (1).

3. Tail planes according to Claim 1 or 2, **characterised in that** the wing parts (21) disposed in their active position on the underside (4) of the tail planes (1) vary, in particular increase, the angle of attack (2) of the tail planes (1) jointly with wing parts (20) disposed in their active position on the upper side (3) of the tail planes (1).

4. Tail planes according to one of Claims 1 to 3, **characterised in that** wing parts (20, 21) extend over a portion of the length of the tail planes (1).

5. Tail planes according to one of Claims 1 to 4, **characterised in that** wing parts (20, 21) extend from the leading edge (24) to the trailing edge (23) of the tail planes (1).

6. Tail planes according to one of Claims 1 to 4, **characterised in that** wing parts (20, 21) extend from the leading edges (24) of the tail planes (1) and protrude rearward over the trailing edges (23) of the tail planes (1).

7. Tail planes according to one of Claim 1 to 4, **characterised in that** wing parts (20, 21) protrude forward over the leading edges (24) of the tail planes (1) and extend to the trailing edges (23) of the tail planes (1).

8. Tail planes according to one of Claims 1 to 4, **characterised in that** wing parts (20, 21) protrude forward over the leading edges (24) of the tail planes (1) and rearward over the trailing edges (23) of the tail planes (1).

9. Tail planes according to one of Claims 1 to 8, **characterised in that** wing parts (20, 21) extend over the entire length of the tail planes (1).

10. Tail planes according to one of Claims 1 to 9, **characterised in that** wing parts (20, 21) protrude over the outer ends of the tail planes (1).

11. Tail planes according to one of Claims 1 to 10, **characterised in that** wing parts (20, 21) may be shifted out of/into receiving areas (40, 41) in the interior of the aircraft body (30) or out of/into chambers (40) disposed on the tail planes (1).

12. Tail planes according to one of Claims 1 to 11, **characterised in that** wing parts (20, 21) are constructed from multiple parts (25, 26, 28).

13. Tail planes according to Claim 12, **characterised in that** the parts (25, 26, 28) of wing parts (20, 21) can telescope into and out of one another.

14. Tail planes according to one of Claims 1 to 13, **characterised in that** wing parts (20) of the upper side (3) and wing parts (21) of the underside (4) are assigned to the tail planes (1).

15. Tail planes according to one of Claims 1 to 14, **characterised in that** the surfaces of wing parts (20, 21) facing the tail planes (1) are shaped congruently to the profile shape of the upper side (3) and/or the underside (4) of the tail planes (1).

16. Tail planes according to one of Claims 1 to 15, **characterised in that** wing parts (20, 21) abut at least partially against the upper side (3) and/or the underside (4) of the tail planes (1).

17. Tail planes according to one of Claims 1 to 15, **characterised in that** wing parts (21) are disposed at a distance from the underside (4) of the tail planes (1).

18. Tail planes according to one of Claims 1 to 15, **characterised in that** wing parts (20) are disposed at a distance from the upper side (3) of the tail planes (1).

19. Tail planes according to one of Claims 6 to 18, **characterised in that** wing parts (20,21) abut against one another in their section protruding over the leading edge (24) and/or the trailing edge (23) of the tail planes (1).

20. Tail planes according to Claim 19, **characterised in that** wing parts (20, 21) are interconnected in the region of their abutting sections.

21. Tail planes according to one of Claims 1 to 20, **characterised in that** at least one additional wing part (35) is provided in the region of the leading edge (24) and/or in the region of the trailing edge (23) of the tail planes (1).

22. Tail planes according to Claim 21, **characterised in that** the additional wing part (35) is arranged to engage over the wing parts (20,21) from the front and/or from the rear.

23. Tail planes according to one of Claims 1 to 22, **characterised in that** wing parts (20, 21) are constructed to engage over one another in the region of the leading edge (24) and/or the trailing edge (23) of the tail planes (1).

24. Tail planes according to one of Claims 1 to 23, **characterised in that** wing parts (21) assigned to the underside (4) of the tail planes (1) and/or wing parts (20) assigned to the upper side (3) of the tail planes (1) are constructed to engage over the leading edges (24) and/or the trailing edges (23) of the tail planes (1).

25. Tail planes according to one of Claims 1 to 24, **characterised in that** connecting elements (50) are provided, with which wing parts (20, 21, 35) are displaceably coupled to one another and/or to the tail planes (1).

26. Tail planes according to Claim 25, **characterised in that** the connecting elements (50) are intermeshing groove-and-rib guide means.

27. Tail planes according to Claim 26, **characterised in that** the grooves are undercut grooves and the ribs have correspondingly diametrically opposed profiles.

28. Tail planes according to one of Claims 1 to 27, **characterised in that** the at least one wing part (20) assigned to the upper side (3) of the tail planes (1) is connected to the at least one wing part (21) assigned to the underside (4) of the tail planes (1).

29. Tail.planes according to Claim 2 8, **characterised in that** wing parts (20) are constructed in one piece with wing parts (21).

30. Tail planes according to one of Claims 1 to 29, **characterised in that** the at least one wing part (20, 21) of one tail plane (1) maybe shifted into the active position independently of the wing parts (20, 21) of the other tail plane (1).

31. Tail planes according to one of Claims 1 to 30, **characterised in that** the wing parts (20, 21) assigned to the tail planes (1) can be moved individually and asynchronously to permit control pulses.

## Revendications

1. Voilure d'avion (1), en particulier aile d'avion (1), présentant une section transversale et un angle d'incidence adaptés pour le vol aux vitesses élevées, des éléments d'ailes (20, 21) qui modifient la portance étant associés aux dites ailes (1), lesquels éléments peuvent être déplacés d'une position d'attente, non active sur le plan aérodynamique, dans une position active sur le plan aérodynamique et inversement de la position active dans la position d'attente, non active, **caractérisée en ce que** les éléments d'aile (20, 21), dans leur position active, sont disposés sur l'extrados (3) et/ou l'intrados (4) de l'aile (1), **en ce qu'**au moins un élément d'aile (20, 21) sur l'extrados et/ou l'intrados de l'aile (1), dans sa position active, s'étend au moins sur la plus grande partie de la largeur de l'aile (1), entre son bord avant (24) et son bord arrière (23), et **en ce que** les éléments d'aile (20) déplacés dans leur position active augmentent la portance de l'aile (1) et modifient, en particulier augmentent, l'angle d'incidence (2) de l'aile (1).

2. Aile selon la revendication 1, **caractérisée en ce que** les éléments d'aile (20) qui, dans leur position active sont disposés sur l'extrados (3) de l'aile (1), augmentent la portance.

3. Aile selon la revendication 1 ou 2, **caractérisée en ce que** les éléments d'aile (21) qui, dans leur position active sont disposés sur l'intrados (4) de l'aile (1), en combinaison avec les éléments d'aile (20) qui, dans leur position active sont disposés sur l'extrados (3) de l'aile (1), modifient, en particulier augmentent l'angle d'incidence de l'aile (1).

4. Aile selon une des revendications 1 à 3, **caractérisée en ce que** les éléments d'aile (20, 21) s'étendent sur une partie de la longueur de l'aile (1).

5. Aile selon une des revendications 1 à 4, **caractérisée en ce que** les éléments d'aile (20, 21) s'étendent depuis le bord avant (24) jusqu'au bord arrière (23) de l'aile (1).

6. Aile selon une des revendications 1 à 4, **caractérisée en ce que** les éléments d'aile (20, 21) partent des bords avant (24) de l'aile (1) et débordent vers l'arrière au-delà des bords arrière (23) de l'aile (1).

7. Aile selon une des revendications 1 à 4, **caractérisée en ce que** les éléments d'aile (20, 21) débordent vers l'avant au-delà des bords avant (24) de l'aile (1) et s'étendent jusqu'aux bords arrière (23) de l'aile (1).

8. Aile selon une des revendications 1 à 4, **caractérisée en ce que** les éléments d'aile (20, 21) débordent vers l'avant au-delà des bords avant (24) et vers l'arrière au-delà des bords arrière (23) de l'aile (1).

9. Aile selon une des revendications 1 à 8, **caractérisée en ce que** les éléments d'aile (20, 21) s'étendent sur toute la longueur de l'aile (1).

10. Aile selon une des revendications 1 à 9, **caractérisée en ce que** les éléments d'aile (20, 21) débordent au-delà des extrémités extérieures de l'aile (1).

11. Aile selon une des revendications 1 à 10, **caractérisée en ce que** les éléments d'aile (20, 21) peuvent être déplacés hors/dans des logements (40, 41) à l'intérieur du fuselage (30) de l'avion ou hors/dans des chambres (40) aménagées dans les ailes (1).

12. Aile selon une des revendications 1 à 11, **caractérisée en ce que** les éléments d'aile (20, 21) sont réalisés en plusieurs parties (25, 26, 28).

13. Aile selon la revendication 12, **caractérisée en ce que** les éléments d'aile (20, 21) peuvent coulisser les uns dans les autres de manière télescopique.

14. Aile selon une des revendications 1 à 13, **caractérisée en ce que** des éléments d'aile (20) sont associés à l'extrados (3) et des éléments d'aile (21) sont associés à l'intrados (4) de l'aile (1).

15. Aile selon une des revendications 1 à 14, **caractérisée en ce que** les surfaces des éléments d'aile (20, 21) tournées vers les ailes ont une conformation congruente avec le profil de l'extrados (3) et/ou de l'intrados (4) de l'aile (1).

16. Aile selon une des revendications 1 à 15, **caractérisée en ce que** des éléments d'aile (20, 21) reposent au moins partiellement sur l'extrados (3) et/ou l'intrados (4) de l'aile (1).

17. Aile selon une des revendications 1 à 15, **caractérisée en ce que** des éléments d'aile (21) sont écartés de l'intrados (4) de l'aile (1).

18. Aile selon une des revendications 1 à 15, **caractérisée en ce que** des éléments d'aile (20) sont écartés de l'extrados (3) de l'aile (1).

19. Aile selon une des revendications 6 à 18, **caractérisée en ce que** des éléments d'aile (20, 21) sont en contact les uns avec les autres dans leurs parties débordant par rapport au bord avant (24) et/ou au bord arrière (23) de l'aile (1).

20. Aile selon la revendication 19, **caractérisée en ce que** des éléments d'aile (20, 21) sont liés entre eux dans la région des parties en contact réciproque.

21. Aile selon une des revendications 1 à 20, **caractérisée en ce qu'**il est prévu au moins un élément d'aile supplémentaire (35) dans la région du bord avant (24) et/ou dans la région du bord arrière (23) de l'aile (1).

22. Aile selon la revendication 21, **caractérisée en ce que** l'élément d'aile supplémentaire (35) est disposé de telle sorte qu'il recouvre sur l'avant et/ou sur l'arrière les éléments d'aile (20, 21).

23. Aile selon une des revendications 1 à 22, **caractérisée en ce que** des éléments d'aile (20, 21) sont conformés de telle sorte qu'ils se chevauchent mutuellement dans la région du bord avant (24) et/ou dans la région du bord arrière (23) de l'ailé (1).

24. Aile selon une des revendications 1 à 23, **caractérisée en ce que** des éléments d'aile (21) associés à l'intrados (4) de l'aile (1) et/ou des éléments d'aile (201) associés à l'extrados (3) de l'aile (1) sont conformés de telle sorte qu'ils recouvrent les bords avant (24) et/ou les bords arrière (23) de l'aile (1).

25. Aile selon une des revendications 1 à 24, **caractérisée en ce qu'**il est prévu des moyens de liaison (50) par lesquels des éléments d'aile (20, 21, 35) sont couplés de manière coulissante entre eux et/ou aux ailes (1).

26. Aile selon la revendication 25, **caractérisée en ce que** les moyens de liaison (50) sont des guides à rainure-languette qui s'interpénètrent.

27. Aile selon la revendication 26, **caractérisée en ce que** les rainures sont des rainures en contre-dépouille et **en ce que** les languettes sont profilées de manière adaptée.

28. Aile selon une des revendications 1 à 27, **caractérisée en ce que** l'élément d'aile (20), au nombre d'au moins un, associé à l'extrados (3) de l'aile (1) est lié à l'élément d'aile (21), au nombre d'au moins un, associé à l'intrados (4) de l'aile (1).

29. Aile selon la revendication 28, **caractérisée en ce que** les éléments d'aile (20) sont réalisés d'une pièce avec les éléments d'aile (21).

30. Aile selon une des revendications 1 à 29, **caractérisée en ce que** l'élément d'aile (20, 21), au nombre d'au moins un, d'une l'aile (1) peut être déplacé dans la position active indépendamment des éléments d'aile (20, 21) de l'autre l'aile (1).

31. Aile selon une des revendications 1 à 30, **caractérisée en ce que** les éléments d'aile (20, 21) associés aux ailes (1) peuvent être déplacés séparément et, de manière à permettre des impulsions de commande, de manière asynchrone.
